Europäisches Patentamt

(19) European Patent Office

Office européen des brevets

(11) Publication number: **0 278 738**
**A2**

# (12) EUROPEAN PATENT APPLICATION

(21) Application number: **88301094.4**

(22) Date of filing: **10.02.88**

(51) Int. Cl.⁴: **G 01 J 3/36**
**G 01 D 5/26**

(30) Priority: **10.02.87 US 12981**

(43) Date of publication of application:
**17.08.88 Bulletin 88/33**

(84) Designated Contracting States:
**AT BE CH DE ES FR GB GR IT LI LU NL SE**

(71) Applicant: **SHILEY INCORPORATED**
**17600 Gillette**
**Irvine California (US)**

(72) Inventor: **Leader, Matthew James**
**5649 Los Santos Drive**
**Long Beach California (US)**

**Kamiya, Tadao**
**4423 E. Olive Branch Way**
**Anaheim California (US)**

(74) Representative: **Boydell, John Christopher et al**
**Stevens, Hewlett & Perkins 5 Quality Court Chancery**
**Lane**
**London, WC2A 1HZ (GB)**

(54) **Multichannel optical system.**

(57) A unitary detection system for detecting and measuring electromagnetic signals from a plurality of input channels which system comprises a compartment having opaque walls, an input terminal adapted to receive two or more optical fibers located in a first wall, a holographic diffraction grating mounted within said compartment at a position which focuses input signals entering through said input terminal and a photodiode array mounted in a second wall at a position to receive diffracted signals from said grating, the total cross-sectional area of said input terminal being matched to the total area of said array so that every signal entering the system is detected by said array.

FIG. 1

**Description**

MULTICHANNEL OPTICAL SYSTEM

This invention relates to a detection system for detecting and measuring electromagnetic signals from a plurality of input channels. More particularly, the invention is concerned with a multichannel system wherein optical signals passing through said channels, usually optical fibers, are detected in a unitary detection system.

The unitary detection system of the invention comprises components which themselves are known the art. For example the holographic grating, which is a concave diffraction grating used to focus an incoming light signal on to a photodiode array detector, is a known piece of apparatus.

Also the photodiode array used to detect the signal is known. A suitable array is commercially available from Hamamatsu Corporation, Middlesex, New Jersey.

Heretofore, systems using a concave diffraction grating in association with a photodiode array have been used to detect and analyze signals from a single source. If it was desired to examine signals from another source it was necessary either to uncouple the first source from the dectector and connect the detector to the other source, with consequential calibration adjustments, or to use a second detector. Thus, either an immediate direct comparison of signals from different sources could not be made or additional detector units were required. In the latter case the additional units are not only costly but also require more space and ancillary equipment.

In these prior art systems it was considered necessary to use one detector for each source signal because of the need to finely focus the input radiation via the diffraction grating on to the photodiode array detector. The available surface area of the detector was a conclusive factor in determining its suitability as a detector for a given source signal. Such a system requires to be calibrated so that the signal diffracted by the grating is focussed correctly on to the photodiode and heretofore it was considered that this could be done only from a single fiber optic input.

Surprisingly, it has now been found that a single grating-photodiode unit can be used for a plurality of input channels, provided the total cross-sectional area of the input terminal is matched to the total area of the photodiode array.

In accordance with the present invention there is provided a unitary detection system for detecting and measuring electromagnetic signals from a plurality of input channels which system comprises a compartment having opaque walls, an input terminal adapted to receive two or more optical fibers located in a first wall, a holographic diffraction grating mounted within said compartment at a position which focuses input signals entering through said input terminal and a photodiode array mounted in a second wall at a position to receive diffracted signals from said grating, the total cross-sectional area of said input terminal being matched to the total area of said array so that every signal entering the system is diffracted by said grating and detected by said array.

In a preferred embodiment of the invention the input terminal includes a ferrule adapted to accept and hold a plurality of optical fibers.

As used herein the term "plurality" is intended to mean two or more. In theory, there is no upper limit to the number of fibers which may be used in the system according to the invention, provided said fibers may be accommodated within the input terminal whose cross-sectional area is subject to the restraint defined herein. However, as a practical matter, the maximum number of fibers which can be used in the invention is restricted by the cross-sectional area of each fiber as well as the cross-sectional area of the input terminal. Preferably, the maximum number of fibers used in the system is six, and the invention will be more particularly described with reference to this preferred embodiment wherein the ferrule holds six optical fibers.

The preferred embodiment also includes an optical multiplexing device for differentiating the signals received from each input optical fiber. Suitable devices of this nature are known in the art.

A preferred embodiment of the invention will now be particularly described with reference to the accompanying drawings in which:-

Figure 1 is a schematic plan view of a detection system according to the invention;

Figure 2 is a cross-section through line 2-2 of Figure 1; and

Figure 3 is an cross-section through line III-III of Figure 2.

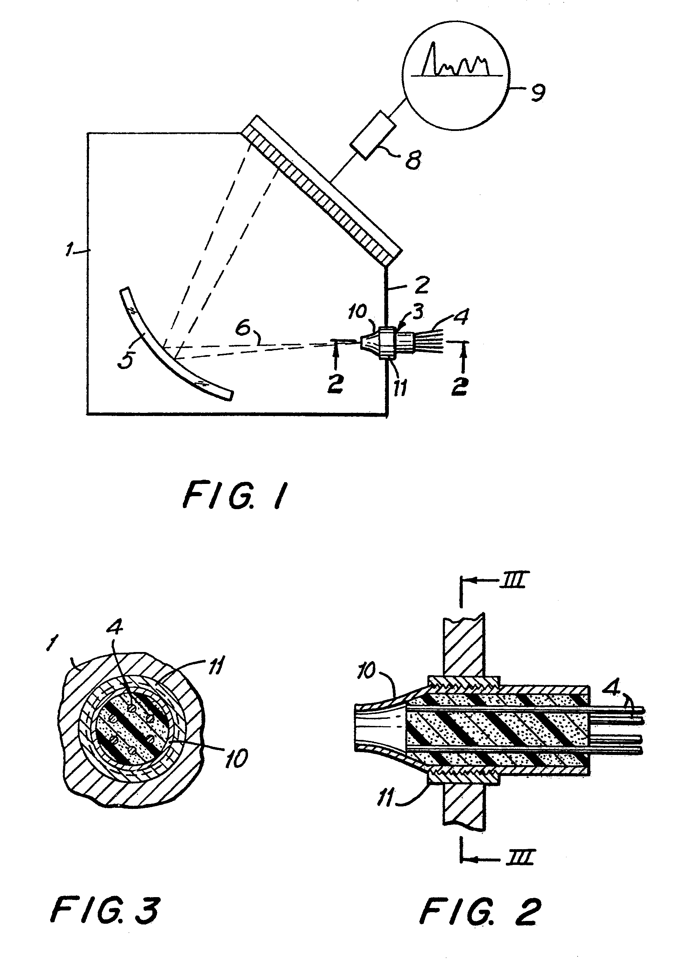

The system illustrated in Figure 1 comprises a light-tight compartment 1 having opaque walls 2. An input terminal 3 adapted to receive optical fibers 4 is located in one wall of the compartment. A concave holographic diffraction grating 5 is mounted within the compartment at a position which focuses input signals entering through the input terminal. A single typical input signal is represented schematically by dotted lines 6.

The input signals focussed on the grating are diffracted by said grating to impinge upon a photodiode array 7 mounted in a wall of the compartment at an angle and a distance from the grating such that all signals entering the input terminal and diffracted by the grating are correctly focussed within the total area of the array and thereby detected by one or more photodiodes of the array. The signals detected by the array are then processed electronically through an amplifier or computer 8 and displayed for analysis in an appropriate display terminal, for example a cathode ray oscilloscope 9 as illustrated in the drawing, or a digital counter or the like.

The concave diffraction grating is chosen to cover the spectrum of wavelengths of the input signals under investigation. For example, if the signals are derived from pH or $pCO_2$ sensors a preferred grating will have a wavelength range of 340-600nm. These wavelengths will be distributed over a 35mm. length photodiode array. A typical array with 35 elements would therefore cover approximately 7.5nm. per element.

A suitable photodiode array for use with the aforesaid grating is one having 35 elements. The sensitive surface per element is $4.4 \times 0.94mm$ giving an effective area of $4.1mm^2$. Such an array has a spectral response over a wavelength range of about 190 to 1000nm.

The input terminal 3 is illustrated in more detail in Figure 2. The signal-bearing optical fibers 4 (four out of six are shown in this illustration) are held in a tapered ferrule 10. The fibers are typically held in place with a suitable adhesive, for example an epoxy resin. The ferrule is removably screwed into a bearing 11 located in a wall of the compartment. The bearing 11 has an internal thread. Thus different-ferrules with optical fibers carrying signals from a variety of sources may be interchanged as desired.

The tapered end of the ferrule automatically focusses the signal from each optical fiber on to the correct position on the diffraction grating.

Figure 3 is a cross-section through the ferrule and illustrates the substantially symmetrical disposition of the six optical fibers 4 about the axis of the input terminal. The cross-sectional area of the input terminal is matched to the total area of the photodiode array so that each of the six signals emanating from the optical fibers is detected by one or more elements of the array.

The detector system of the invention accordingly enables the detection of a plurality of signals by means of a single device.

The following Example illustrates the invention and the manner in which it may be performed.

Example

The throughput and sensitivity of each channel in a bundle of six optical fibers attached to a spectograph was tested.

Six EOTec optical fibers of 400 m diameter were potted in an AMP 2.0 mm. ferrule connector and held with epoxy resin. The disposition of the fibers in the ferrule was as illustrated in Figure 3 of the drawings.

Using an ultra violet radiation source the amplitude and position of the spectrum from each channel was measured individually and the numerical results are given in the following Table. The relative intensity of each spectrum may be plotted graphically from an oscilloscope as shown schematically in Figure 1.

## Table

| Channel No.* | Position (Imax) Detector No. | Amplitude (Volts) |
|---|---|---|
| 1 | 7 | 0.3998 |
| 2 | 7 | 0.3758 |
| 3 | 7 | 0.4078 |
| 4 | 6 | 0.4105 |
| 5 | 5 | 0.3958 |
| 6 | 6 | 0.3945 |

\* fibers numbered clockwise from top (Figure 3) No. 1 is at 12 o'clock.

Claims

1. A unitary detection system for detecting and measuring electromagnetic signals from a plurality of input channels, characterized in that it comprises a compartment 1 having opaque walls 2, an input terminal 3 adapted to receive two or more optical fibers 4 located in a first wall, a holographic diffraction grating 5 mounted within said compartment at a position which focuses input signals entering through said input terminal and a photodiode array 7 mounted in a second wall at a position to receive diffracted signals from said grating, the total cross-sectional area of said input terminal being matched to the total area of said array so that every signal entering the system is detected by said array.

2. A system according to claim 1, characterized in that the input terminal includes a ferrule 10 adapted to accept and hold a plurality of optical fibers.

3. A system according to claim 2, characterized in that said ferrule holds six optical fibers.

4. A system according to claim 1, characterized in that it includes an optical multiplexing device for differentiating the signals received from each input optical fiber.

0278738

FIG. 1

FIG. 3

FIG. 2